# EUROPEAN PATENT APPLICATION

(11) **EP 4 365 721 A1**
(43) Date of publication of application: **08.05.2024**
(21) Application number: 22855989.4
(22) Date of filing: 10.06.2022
(51) Int. Cl.: G06F 3/0481, G06F 3/0486, G06F 3/0488, G06F 3/14, G06F 3/16, G06F 9/451, H04N 23/60

(54) **ELECTRONIC DEVICE INCLUDING FLEXIBLE DISPLAY AND METHOD FOR OPERATING SAME**

(30) Priority: 10.08.2021 KR 20210105678
(71) Applicant: Samsung Electronics Co., Ltd., Suwon-si, Gyeonggi-do 16677 (KR)
(72) Inventor: KIM, Minho, Suwon-si Gyeonggi-do 16677 (KR); CHOI, Juyong, Suwon-si Gyeonggi-do 16677 (KR); KIM, Jinhyun, Suwon-si Gyeonggi-do 16677 (KR); JANG, Jongwoon, Suwon-si Gyeonggi-do 16677 (KR)
(74) Representative: Gulde & Partner
(86) International application number: PCT/KR2022/008240
(87) International publication number: WO 2023/017987

(57) **Abstract**

According to various embodiments, an electronic device comprises a display and a processor, wherein the processor may be set to: control the display to display an execution screen of a camera application through a first region of the display and display an image list linked with the camera application through a second region different from the first region of the display in response to the execution of the camera application, the image list including a plurality of images and the plurality of images including still images and moving images, acquire a first image captured using the camera application in response to an image capture request, control the display to display a first temporary image corresponding to the first image in the image list through the second region when it is determined that post-processing of the first image is required, and control the display to display a first post-processed image instead of the first temporary image in the image list through the second region, the first post-processed image being obtained by completing post-processing of the first image.

## Description

### [Technical Field]

Various embodiments relate to an electronic device including a flexible display and a method of operating the same.

### [Background Art]

Along with the increasing demand for mobile communications and the increasing integration level of electronic devices, electronic devices, such as mobile communication terminals become more portable and more convenient to use multimedia functions and so on. For example, as a display with a touch screen function integrated therein replaces a traditional mechanical (button) keypad, an electronic device may be miniaturized while maintaining the functionality of an input device. For example, the portability of the electronic device may be improved by removing the mechanical keypad from the electronic device. In another embodiment, the electronic device including the touch screen function may provide a larger screen than the electronic device by extending the display by as much as an area where the mechanical keypad is removed, even if the electronic device has the same size and weight as one with a mechanical keypad.

It may be more convenient to use an electronic device with a larger screen in surfing the web or using multimedia functions. While an electronic device may be equipped with a larger display to produce a larger screen, the portability of the electronic device may limit the ability to increase the size of the display. In an embodiment, a flexible display may provide a larger screen while maintaining the portability of an electronic device. For example, a flexible display (or an electronic device equipped with it) may operate stably even when it is built fairly thin, so that the flexible display may be mounted on an electronic device in a foldable, bendable, or rollable form.

### [DETAILED DESCRIPTION OF THE INVENTION]

### [Technical Problem]

To execute an additional function (e.g., share, edit, delete, or zoom in/out) on a captured image after the image is captured using a camera application of an electronic device, another application (e.g., a gallery application or an image viewer application) should be executed, which is inconvenient.

According to various embodiments, an electronic device and a method of operating the same may display an execution screen of a camera application in a first region of a display, display a plurality of captured images in a second region of the display, and execute an additional function on the plurality of captured images displayed in the second region according to a user input.

### [Technical Solution]

According to various embodiments, an electronic device includes a display and a processor. The processor is configured to, in response to executing a camera application, control the display to display an execution screen of the camera application in a first region of the display and display an image list interworking with the camera application in a second region of the display different from the first region, wherein the image list includes a plurality of images, and the plurality of images are configurable to include a still image and a video, obtain a first image captured using the camera application in response to a request to capture an image, when determining that the first image needs post-processing, control the display to display, in the second region, a first provisional image corresponding to the first image in the image list, and control the display to display, in the second region, a first post-processed image obtained by completing post-processing on the first image in place of the first provisional image in the image list.

According to various embodiments, a method of operating an electronic device includes, in response to executing a camera application, controlling a display of the electronic device to display an execution screen of the camera application in a first region of the display and display an image list interworking with the camera application in a second region of the display different from the first region, wherein the image list includes a plurality of images, and the plurality of images are configurable to include a still image and a video, obtaining a first image captured using the camera application in response to a request to capture an image, when determining that the first image needs post-processing, controlling the display to display, in the second region, a first provisional image corresponding to the first image in the image list, and controlling the display to display, in the second region, a first post-processed image obtained by completing post-processing on the first image in place of the first provisional image in the image list.

### [Advantageous Effects]

According to various embodiments, an electronic device and a method of operating the same may be provided, which improve the convenience of image capturing and image editing for a user by simultaneously performing an operation of displaying an execution screen of a camera application in a first region of a display and an operation of displaying a plurality of captured images in a captured order in a second region of the display.

### [BRIEF DESCRIPTION OF DRAWINGS]

FIG. 1 is a block diagram illustrating an electronic device in a network environment according to various embodiments of the disclosure.
FIG. 2 is a flowchart illustrating a method of displaying an execution screen of a camera application and an image list together on a display and executing an additional function on an image included in the image list in an electronic device according to various embodiments.
FIG. 3 is a diagram illustrating an embodiment of an operation of displaying an execution screen of a camera application and an image list based on specific orientations in an electronic device according to various embodiments.
FIG. 4 is a diagram illustrating an embodiment of an operation of displaying a first provisional image and a first post-processed image in an electronic device according to various embodiments.
FIG. 5 is a flowchart illustrating a method of synchronizing an image list with an image database after changing an image in the image list using an image editing application in an electronic device according to various embodiments.
FIG. 6 is a flowchart illustrating a method of allowing an image list to reference an image from an image database and displaying the referenced image in a second region of a display according to various embodiments.
FIG. 7 is a diagram illustrating an embodiment in which an electronic device sets a sound path of a shutter sound of a camera application to a system sound path during playback of a video from an image list according to various embodiments.
FIG. 8 is a diagram illustrating an embodiment in which an electronic device sets a sound path of a shutter sound of a camera application to a media sound path during playback of a video from an image list according to various embodiments.

### [MODE FOR CARRYING OUT THE INVENTION]

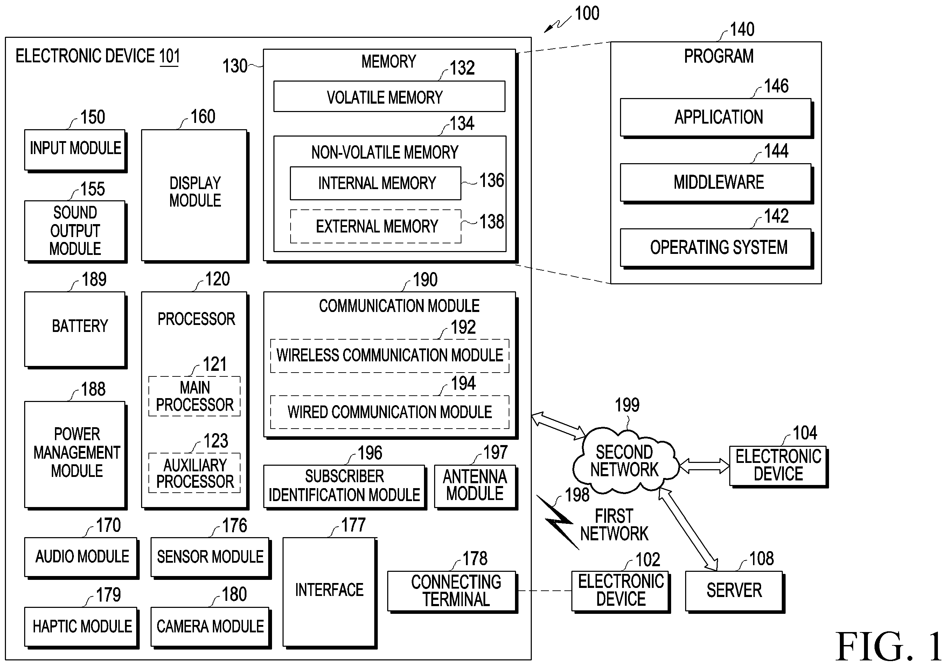

FIG. 1 is a block diagram illustrating an electronic device in a network environment according to various embodiments of the disclosure.

Referring to FIG. 1, an electronic device 101 in a network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., a sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form an mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., a smart home, a smart city, a smart car, or healthcare) based on 5G communication technology or IoT-related technology.

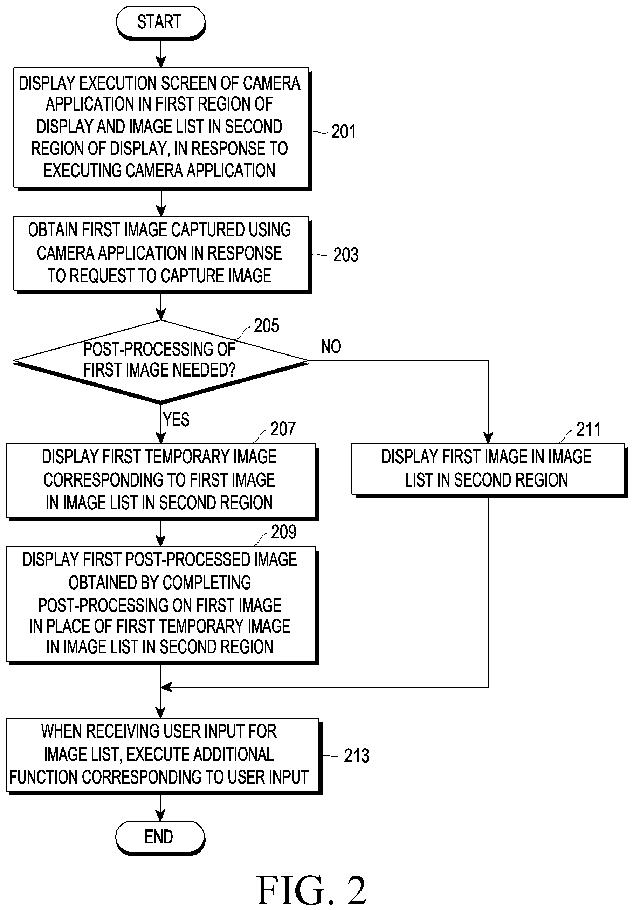

FIG. 2 is a flowchart illustrating a method of displaying an execution screen of a camera application and an image list together on a display (e.g., the display module 160 of FIG. 1) and executing an additional function on an image in the image list in an electronic device (e.g., the electronic device 101 of FIG. 1) according to various embodiments.

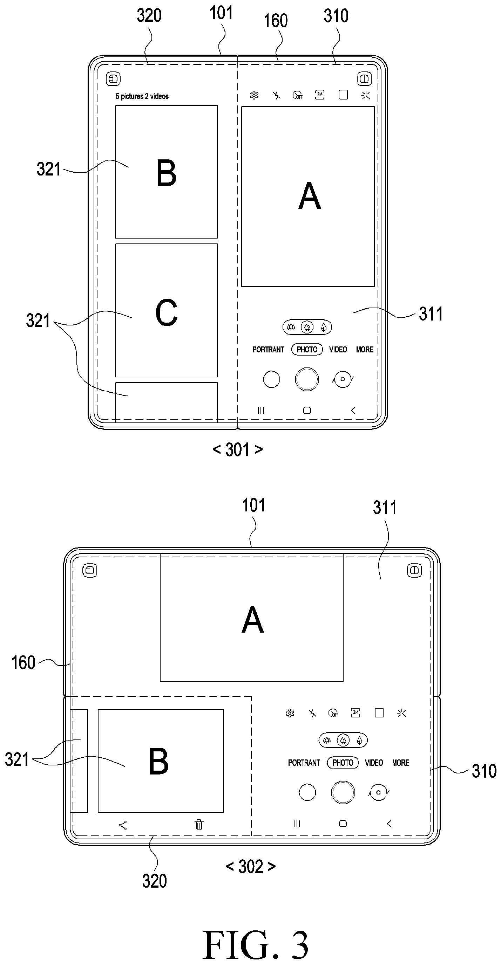

FIG. 3 is a diagram illustrating an embodiment of an operation of displaying an execution screen of a camera application and an image list based on specific orientations in the electronic device 101 according to various embodiments.

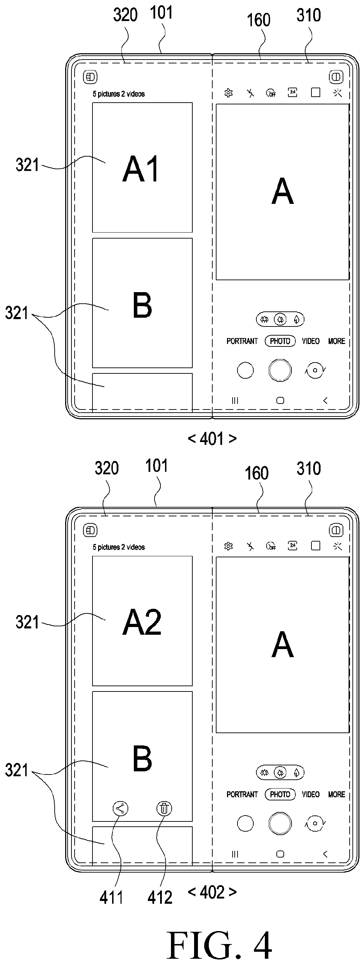

FIG. 4 is a diagram illustrating an embodiment of an operation of displaying a first provisional image and a first post-processed image in the electronic device 101 according to various embodiments.

In operation 201, according to various embodiments, the electronic device 101 (e.g., the processor 120 of FIG. 1) may display an execution screen of a camera application in a first region of the display 160 and an image list in a second region of the display 160 in response to executing the camera application. For example, referring to 301 in FIG. 3, when the electronic device 101 faces a first direction (e.g., a portrait direction), the electronic device 101 may display an execution screen 311 of the camera application in a first region 310 of the display 160 and display at least one image included in an image list 321 in a second region 320 different from the first region 310, in response to executing the camera application. In another example, referring to 302 of FIG. 3, when the electronic device 101 faces a second direction (e.g., a landscape direction), the electronic device 101 may display the execution screen 311 of the camera application in the first region 310 of the display 160 and display at least one image included in the image list 321 in the second region 320, in response to executing the camera application. According to an embodiment, the electronic device 101 may display a preview image obtained in real time using a camera (e.g., the camera module 180 of FIG. 1) on the execution screen 311 of the camera application. According to an embodiment, the image list 321 may include a plurality of images, and the plurality of images may include still images and videos. According to an embodiment, at least one image included in the image list 321 may be sorted by time taken by the camera application and/or by time added/deleted/edited by an image editing application. According to an embodiment, the at least one image included in the image list 321 may be a predetermined number of (e.g., 100) images that the image list 321 references (e.g., loads) from an image database (media database).

In operation 203, according to various embodiments, the electronic device 101 (e.g., the processor 120 of FIG. 1) may obtain a first image captured using the camera application in response to an image capture request. For example, referring to 301 in FIG. 3, the electronic device 101 may obtain a first image captured using the camera 180 in response to a user input of selecting a shutter button displayed on the execution screen 311 of the camera application, in which case the first image may correspond to raw data.

In operation 205, according to various embodiments, the electronic device 101 (e.g., the processor 120 of FIG. 1) may determine whether the first image needs post-processing. According to an embodiment, the electronic device 101 may determine whether the first image needs post-processing based on an image capture mode of the first image. For example, when capturing the first image, the electronic device 101 may determine that the first image needs post-processing based on the image capture mode of the first image corresponding to a predetermined image capture mode (e.g., a night image capture mode, a portrait image capture mode, or a wide-angle image capture mode).

In operation 207, according to various embodiments, when the first image needs post-processing, the electronic device 101 (e.g., the processor 120 of FIG. 1) may display a first provisional image corresponding to the first image within the image list 321 in the second region 320. According to an embodiment, when determining that the first image needs post-processing, the electronic device 101 may add the first provisional image corresponding to the first image to the image list 321 and display the first provisional image in the second region 320. For example, referring to 301 in FIG. 3 and 401 in FIG. 4, when capturing a first image (e.g., A) in the night image capture mode, the electronic device 101 may add a first provisional image (e.g., A1) prior to post-processing of the first image to the image list 321 and display the first provisional image in the second region 320. According to an embodiment, the electronic device 101 may parse the first provisional image from memory (e.g., the memory 130 of FIG. 1), associate the first provisional image with temporary identification information (e.g., a media ID), and then add the first provisional image to the image list 321. According to an embodiment, the first provisional image may be identical to the first image or may be an image that is temporarily stored in the memory 130 prior to post-processing of the first image.

In operation 209, according to various embodiments, the electronic device 101 (e.g., the processor 120 of FIG. 1) may display a first post-processed image obtained by completing post-processing on the first video in place of the first provisional image in the image list 321 in the second region 320. For example, referring to 401 and 402 in FIG. 4, when the electronic device 101 completes post-processing on the first image (e.g., A), it may display a first post-processed image (e.g., A2) obtained by post-processing the first image in place of the first provisional image (e.g., A1) in the image list 321 in the second region 320. According to an embodiment, after obtaining the first post-processed image, the electronic device 101 may generate image identification information (e.g., media provider uri) for the first post-processed image, associate the image identification information with the first post-processed image, and then update the image list 320 such that the first post-processed image and the image identification information replace the first provisional image and the temporary identification information.

In operation 211, according to various embodiments, when the first image does not need post-processing, the electronic device 101 (e.g., the processor 120 of FIG. 1) may display the first image within the image list 321 in the second region 320. According to an embodiment, after obtaining the first image, the electronic device 101 may generate the image identification information (e.g., media provider uri) for the first image, associate the image identification information with the first image, and then add the first image to the image list 321.

In operation 213, according to various embodiments, when receiving a user input for the image list 321 in the second region 320 while displaying the execution screen 311 of the camera application in the first region 310, the electronic device 101 (e.g., the processor 120 of FIG. 1) may execute an additional function corresponding to the user input.

According to an embodiment, in response to a first user input for a specific image in the image list 321, the electronic device 101 may execute a sharing function on the specific image. For example, referring to <402> in FIG. 4, the electronic device 101 may execute the sharing function on a specific image (e.g., B) in response to a user input of selecting a share icon 411 included in the specific image within the image list 321.

According to an embodiment, in response to a second user input for a specific image within the image list 321, the electronic device 101 may execute a delete function on the specific image. For example, referring to <402> in FIG. 4, the electronic device 101 may delete a specific image (e.g., B) from the image list 321 in response to a user input of selecting a delete icon 412 included in the specific image within the image list 321, and delete the specific image from the image database in a process of synchronizing the image database with the image list 321.

According to an embodiment, the electronic device 101 may execute a zoom-in or zoom-out function on a specific image in response to a third user input for the specific image in the image list 321. For example, referring to <402> in FIG. 4, the electronic device 101 may execute the zoom-in or zoom-out function on a specific image (e.g., B) within the image list 321 in response to a pinch-in or pinch-out input for the specific image.

According to an embodiment, in response to a fourth user input for a specific image in the image list 321, the electronic device 101 may display an execution screen of a gallery application including the specific image. For example, referring to <402> in FIG. 4, the electronic device 101 may launch the gallery application in response to a user input (e.g., tap) of selecting a specific image (e.g., B) within the image list 321, display the execution screen of the gallery application including the specific image in at least one of the first region 310 or the second region 320, and display the specific image as a main image of the execution screen of the gallery application.

According to an embodiment, the electronic device 101 may execute a scrolling function on the image list 321 in response to a fifth user input for the image list 321. For example, the electronic device 101 may scroll up or down the image list 321 based on a user's dragging direction in the image list 321.

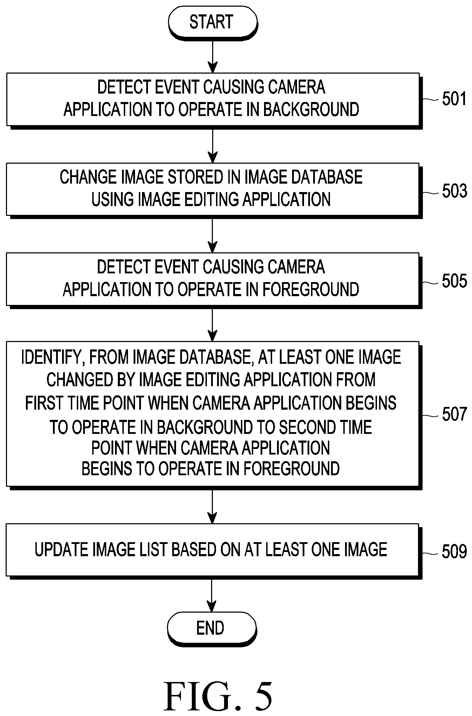

FIG. 5 is a flowchart illustrating a method of synchronizing an image list (e.g., the image list 321 of FIG. 3) with an image database after changing an image in the image database using an image editing application in an electronic device (e.g., the electronic device 101 of FIG. 1) according to various embodiments.

In operation 501, according to various embodiments, the electronic device 101 (e.g., the processor 120 of FIG. 1) may detect an event that causes a camera application to operate in the background. For example, while executing the camera application, the electronic device 101 may switch the camera application to the background and display a home screen in response to a user input requesting to display the home screen. In another example, while executing the camera application, the electronic device 101 may switch the camera application to the background and execute an image editing application (e.g., a gallery application) that is different from the camera application in response to a user input requesting to execute the image editing application. According to an embodiment, the electronic device 101 may store information about a first time point when the camera application begins to operate in the background.

In operation 503, according to various embodiments, the electronic device 101 (e.g., the processor 120 of FIG. 1) may change an image stored in an image database using the image editing application. According to an embodiment, the image database may store images having a predetermined format among images processed within the electronic device 101 and interwork with each application for processing images. According to an embodiment, the electronic device 101 may add a new image to the image database using the image editing application. According to an embodiment, the electronic device 101 may modify or delete an image existing in the image database using the image editing application.

In operation 505, according to various embodiments, the electronic device 101 (e.g., the processor 120 of FIG. 1) may detect an event that causes the camera application to operate in the foreground. For example, while executing the image editing application, the electronic device 101 may switch the camera application operating in the background state to the foreground state, display an execution screen (e.g., the execution screen 310 of FIG. 1) of the camera application in a first region (e.g., the first region 310 of FIG. 3) and the image list 321 in a second region (e.g., the second region 320 of FIG. 3), in response to a user input requesting to execute the camera application.

In operation 507, according to various embodiments, the electronic device 101 (e.g., the processor 120 of FIG. 1) may identify, from the image database, at least one image that has been changed by the image editing application from the first time point when the camera application begins to operate in the background to a second time point when the camera application begins to operate in the foreground. According to various embodiments, the electronic device 101 (e.g., the processor 120 of FIG. 1) may identify an additional image added to the image database by the image editing application from the first time point to the second time point.

In operation 509, according to various embodiments, the electronic device 101 (e.g., the processor 120 of FIG. 1) may update the image list 321 based on the at least one image.

According to various embodiments, the electronic device 101 (e.g., the processor 120 of FIG. 1) may identify one or more images associated with the image list 321 among the at least one image that has been changed by the image editing application between the first time point and the second time point, and update the image list 321 based on the one or more images. According to an embodiment, when (1) the image list 321 references (e.g., loads) a first specific image in the image database at the first time point, and (2) the first specific image in the image database is edited into a first edited image between the first time point and the second time point using the image editing application, the electronic device 101 may identify the first specific image referenced by the image list 321 among the at least one image, and update the image list 321 to reference the first edited image in place of the first specific image. According to an embodiment, when (1) the image list 321 references a second specific image in the image database at the first time point, and (2) the second specific image is deleted from the image database between the first time point and the second time point using the image editing application, the electronic device 101 may identify the second specific image referenced by the image list 321 among the at least one image, and update the image list 321 to delete the second specific image from the image list 321.

According to various embodiments, the electronic device 101 (e.g., the processor 120 of FIG. 1) may update the image list 321 such that the image list 321 references an additional image added by the image editing application between the first and second time points.

For example, [Table 1] below represents a pseudo code for updating the image list 321 based on at least one image changed or added by the image editing application between the first time point and the second time point.

**[Table 1]**

| |
|---|
| Void onTopResumedActivityChanged(boolean isTopResumedActivity) { |
| If (isTopResumedActivity) |
| MediaItemLoader.validateRespository(lastAppFocusedDateTime) |
| else |
| lastAppFocusedDateTime=System.currentTimeMillis |
| } |
| void validateRepository in MediaItemLoader { |
| List<CaptureViewItem> currentRepositoryList = ItemRepository.getListU |
| try Cursor cursor // about list items, dateTime >= lastAppFocusedDateTime in Camera Path |
| while { |
| item = loadItemFromCursor(cursor) |
| if item is null // removed item from background app context |
| ItemRepository.remove(item) |
| else |
| If currentRepositoryList.contains(item) // updated item from background app context |
| If item is updated |
| ItemRepository.update(item) // internally update item if contains |
| else // added item from background app context |
| ItemRepository.add(item) // add item into repository |

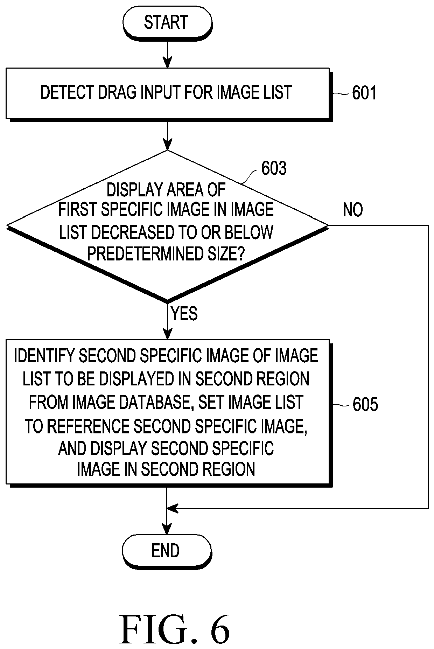

FIG. 6 is a flowchart illustrating a method of allowing an image list (e.g., the image list 321 of FIG. 3) to reference an image from an image database and displaying the referenced image in a second region (e.g., the second region 320 of FIG. 3) of a display (e.g., the display module 160 of FIG. 1 according to various embodiments. In operation 601, according to various embodiments, the electronic device 101 (e.g., the processor 120 of FIG. 1) may detect a drag input for the image list 321. For example, referring to <401> in FIG. 4, the electronic device 101 may detect a drag input that causes the electronic device 101 to execute a scrolling function to search images (e.g., A1, B, C, 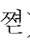 ) in the image list 321.

In operation 603, according to various embodiments, the electronic device 101 (e.g., the processor 120 of FIG. 1) may determine whether a display area of a first specific image in the image list 321 displayed in the second region 320 of the display 160 decreases to or below a predetermined size (e.g., 10%), while detecting the drag input.

In operation 605, according to various embodiments, when the display area of the first specific image decreases to or below the predetermined size, the electronic device 101 (e.g., the processor 120 of FIG. 1) may identify a second specific image of the image list 321 to be displayed in the second region 320 from the image database, set the image list 321 to reference the second specific image from the image database, and display the second specific image in the second region 320.

According to various embodiments, the electronic device 101 (e.g., the processor 120 of FIG. 1) may identify one or more images in the image list 321 to be displayed in the second region 320 from the image database, set the image list 321 to reference the one or more images from the image database, and display the one or more images in the second region 320. In this case, the electronic device 101 may exclude the one or more images displayed in the second region 320 from the images included in the image list 321, and may not reference images not displayed in the second region 320 from the image database.

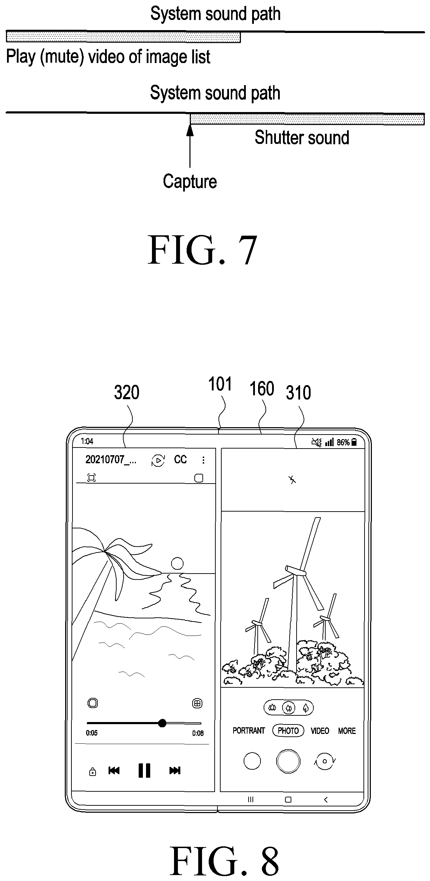

FIG. 7 is a diagram illustrating an embodiment in which an electronic device (e.g., the electronic device 101 of FIG. 1) sets a sound path of a shutter sound of a camera application to a system sound path during playback of a video from an image list (e.g., the image list 321 of FIG. 3) according to various embodiments.

According to various embodiments, the electronic device 101 (e.g., the processor 120 of FIG. 1) may display an execution screen (e.g., the execution screen 311 of FIG. 3) of a camera application in a first region (e.g., the first region 310 of FIG. 3) of a display (e.g., the display module 160 of FIG. 1) and the image list 321 in a second region (e.g., the second region 320 of FIG. 3) of the display.

According to various embodiments, the electronic device 101 (e.g., the processor 120 of FIG. 1) may set a sound path of a video included in the image list 321 to be the same as the sound path of the shutter sound of the camera application. According to an embodiment, the electronic device 101 may set the sound path of the video included in the image list 321 to a system sound path that is the same as the sound path of the shutter sound of the camera application. For example, referring to FIG. 7, when a video in the image list 321 is set to be played muted, the electronic device 101 may play the video in the image list 321 muted using the system sound path, and output the shutter sound of the camera application using the system sound path while playing the video from the image list 321.

FIG. 8 is a diagram illustrating an embodiment in which an electronic device (e.g., the electronic device 101 of FIG. 1) sets a sound path of a shutter sound of a camera application to a media sound path during playback of a video by a video application according to various embodiments.

According to various embodiments, the electronic device 101 (e.g., the processor 120 of FIG. 1) may display an execution screen (e.g., the execution screen 311 of FIG. 3) of a camera application in a first region (e.g., the first region 310 of FIG. 3) of the display (e.g., the display module 160 of FIG. 1) and an execution screen of a video play application in a second region (e.g., the second region 320 of FIG. 3) of the display.

According to various embodiments, the electronic device 101 (e.g., the processor 120 of FIG. 1) may set a sound path of a shutter sound of the camera application to be the same as a sound path of the video played using the video application while playing the video using the video application displayed in the first region 310. According to an embodiment, the electronic device 101 may set the sound path of the shutter sound of the camera application to a media sound path that is the same as the sound path of the video played using the video application while playing the video using the video application. For example, referring to FIG. 8, the electronic device 101 may output the sound of the video played by the video application using the media sound path, and output the shutter sound of the camera application using the media sound path while playing the video. According to an embodiment, the media sound path may refer to a sound path for outputting media sounds (e.g., sounds output by playback of respective media), which is different from the system sound path for outputting system sounds (e.g., sounds preset by a manufacturer of the electronic device 101) as described with reference to FIG. 7.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1^{st}" and "2^{nd}", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

According to various embodiments, an electronic device (e.g., the electronic device 101 of FIG. 1) may include a display (e.g., the display module 160 of FIG. 1) and a processor (e.g., the processor 120 of FIG. 1). The processor may be configured to, in response to executing a camera application, control the display to display an execution screen (e.g., the execution screen 311 of FIG. 3) of the camera application in a first region (e.g., the first region 310 of FIG 3) of the display and display an image list (e.g., the image list 321 of FIG. 3) interworking with the camera application in a second region (e.g., the second region 320 of FIG. 3) of the display different from the first region, wherein the image list includes a plurality of images, and the plurality of images may include a still image and a video, obtain a first image captured using the camera application in response to a request to capture an image, when determining that the first image needs post-processing, control the display to display, in the second region, a first provisional image corresponding to the first image in the image list, and control the display to display, in the second region, a first post-processed image obtained by completing post-processing on the first image in place of the first provisional image in the image list.

According to various embodiments, the processor may be configured to determine that the first image needs post-processing based on an image capture mode of the first image corresponding to a predetermined image capture mode.

According to various embodiments, the processor may be configured to launch a gallery application in response to a user input of selecting a specific image in the image list, and display an execution screen of the gallery application including the specific image in at least one of the first region or the second region.

According to various embodiments, the processor may be configured to identify, from an image database, at least one image changed by an image editing application different from the camera application from a first time point when the camera application begins to operate in a background to a second time point when the camera application begins to operate in a foreground, and update the image list based on the at least one image.

According to various embodiments, the processor may be configured to update the image list to reference a first edited image in place of a first specific image, when (1) the image list references the first specific image in the image database at the first time point, and (2) the first specific image in the image database is edited into the first edited image using the image editing application between the first time point and the second time point.

According to various embodiments, the processor may be configured to update the image list to delete a second specific image from the image list, when (1) the image list references the second specific image in the image database at the first time point, and (2) the second specific image is deleted from the image database using the image editing application between the first time point and the second time point.

According to various embodiments, the processor may be configured to update the image list to cause the image list to newly reference an additional image added by the image editing application between the first time point and the second time point.

According to various embodiments, the processor may be configured to determine whether a display area of a first specific image in the image list decreases to or below a predetermined size, while detecting a drag input for the image list, and when the display area of the first specific image in the image list decreases to or below the predetermined size, identify, from the image database, a second specific image of the image list to be displayed in the second region, and set the image list to reference the second specific image from the image database.

According to various embodiments, the processor may be configured to set a sound path of a video included in the image list to a system sound path identical to a sound path of a shutter sound of the camera application.

According to various embodiments, the processor may be configured to set a sound path of a shutter sound of the camera application to a media sound path identical to a sound path of a video played using a video application displayed in the first region, while playing the video using the video application.

According to various embodiments, a method of operating an electronic device may include, in response to executing a camera application, controlling a display of the electronic device to display an execution screen of the camera application in a first region of the display and display an image list interworking with the camera application in a second region of the display different from the first region, wherein the image list includes a plurality of images, and the plurality of images are configurable to include a still image and a video, obtaining a first image captured using the camera application in response to a request to capture an image, when determining that the first image needs post-processing, controlling the display to display, in the second region, a first provisional image corresponding to the first image in the image list, and controlling the display to display, in the second region, a first post-processed image obtained by completing post-processing on the first image in place of the first provisional image in the image list.

According to various embodiments, the method may further include determining that the first image needs post-processing based on an image capture mode of the first image corresponding to a predetermined image capture mode.

According to various embodiments, the method may further include launching a gallery application in response to a user input of selecting a specific image in the image list, and displaying an execution screen of the gallery application including the specific image in at least one of the first region or the second region.

According to various embodiments, the method may further include identifying, from an image database, at least one image changed by an image editing application different from the camera application from a first time point when the camera application begins to operate in a background to a second time point when the camera application begins to operate in a foreground, and updating the image list based on the at least one image.

According to various embodiments, the updating of the image list may include updating the image list to reference a first edited image in place of a first specific image, when (1) the image list references the first specific image in the image database at the first time point, and (2) the first specific image in the image database is edited into the first edited image using the image editing application between the first time point and the second time point.

According to various embodiments, the updating of the image list may include updating the image list to delete a second specific image from the image list, when (1) the image list references the second specific image in the image database at the first time point, and (2) the second specific image is deleted from the image database using the image editing application between the first time point and the second time point.

According to various embodiments, the updating of the image list may include updating the image list to cause the image list to newly reference an additional image added by the image editing application between the first time point and the second time point.

According to various embodiments, the method may further include determining whether a display area of a first specific image in the image list decreases to or below a predetermined size, while detecting a drag input for the image list, and when the display area of the first specific image in the image list decreases to or below the predetermined size, identifying, from the image database, a second specific image of the image list to be displayed in the second region, and setting the image list to reference the second specific image from the image database.

According to various embodiments, the method may further include setting a sound path of a video included in the image list to a system sound path identical to a sound path of a shutter sound of the camera application.

According to various embodiments, the method may further include setting a sound path of a shutter sound of the camera application to a media sound path identical to a sound path of a video played using a video application displayed in the first region, while playing the video using the video application.

## Claims

1. An electronic device comprising:
a display, and
a processor,
wherein the processor is configured to:
in response to executing a camera application, control the display to display an execution screen of the camera application in a first region of the display and display an image list interworking with the camera application in a second region of the display different from the first region, wherein the image list includes a plurality of images, and the plurality of images are configurable as a still image and a video,
obtain a first image captured using the camera application in response to a request to capture an image,
when determining that the first image needs post-processing, control the display to display, in the second region, a first provisional image corresponding to the first image in the image list, and
control the display to display, in the second region, a first post-processed image obtained by completing post-processing on the first image in place of the first provisional image in the image list.

2. The electronic device of claim 1, wherein the processor is configured to determine that the first image needs post-processing based on an image capture mode of the first image corresponding to a predetermined image capture mode.

3. The electronic device of claim 1, wherein the processor is configured to:
launch a gallery application in response to a user input of selecting a specific image in the image list, and
display an execution screen of the gallery application including the specific image in at least one of the first region or the second region.

4. The electronic device of claim 1, wherein the processor is configured to:
identify, from an image database, at least one image changed by an image editing application different from the camera application from a first time point when the camera application begins to operate in a background to a second time point when the camera application begins to operate in a foreground, and
update the image list based on the at least one image.

5. The electronic device of claim 4, wherein the processor is configured to update the image list to reference a first edited image in place of a first specific image, when (1) the image list references the first specific image in the image database at the first time point, and (2) the first specific image in the image database is edited into the first edited image using the image editing application between the first time point and the second time point.

6. The electronic device of claim 4, wherein the processor is configured to update the image list to delete a second specific image from the image list, when (1) the image list references the second specific image in the image database at the first time point, and (2) the second specific image is deleted from the image database using the image editing application between the first time point and the second time point.

7. The electronic device of claim 4, wherein the processor is configured to update the image list to newly reference an additional image added by the image editing application between the first time point and the second time point.

8. The electronic device of claim 1, wherein the processor is configured to:
determine whether a display area of a first specific image in the image list decreases to or below a predetermined size, while detecting a drag input for the image list, and
when the display area of the first specific image in the image list decreases to or below the predetermined size, identify, from the image database, a second specific image of the image list to be displayed in the second region, and set the image list to reference the second specific image from the image database.

9. The electronic device of claim 1, wherein the processor is configured to set a sound path of a video included in the image list to a system sound path identical to a sound path of a shutter sound of the camera application.

10. The electronic device of claim 1, wherein the processor is configured to set a sound path of a shutter sound of the camera application to a media sound path identical to a sound path of a video played using a video application, while playing the video using the video application displayed in the first region.

11. A method of operating an electronic device, comprising:
in response to executing a camera application, controlling a display of the electronic device to display an execution screen of the camera application in a first region of the display and display an image list interworking with the camera application in a second region of the display different from the first region, wherein the image list includes a plurality of images, and the plurality of images are configurable to include a still image and a video,
obtaining a first image captured using the camera application in response to a request to capture an image,
when determining that the first image needs post-processing, controlling the display to display, in the second region, a first provisional image corresponding to the first image in the image list, and
controlling the display to display, in the second region, a first post-processed image obtained by completing post-processing on the first image in place of the first provisional image in the image list.

12. The method of claim 11, further comprising determining that the first image needs post-processing based on an image capture mode of the first image corresponding to a predetermined image capture mode.

13. The method of claim 11, further comprising:
launching a gallery application in response to a user input of selecting a specific image in the image list, and
displaying an execution screen of the gallery application including the specific image in at least one of the first region or the second region.

14. The method of claim 11, further comprising:
identifying, from an image database, at least one image changed by an image editing application different from the camera application from a first time point when the camera application begins to operate in a background to a second time point when the camera application begins to operate in a foreground, and
updating the image list based on the at least one image.

15. The method of claim 14, wherein the updating of the image list comprises updating the image list to reference a first edited image in place of a first specific image, when (1) the image list references the first specific image in the image database at the first time point, and (2) the first specific image in the image database is edited into the first edited image using the image editing application between the first time point and the second time point.
